**Europäisches Patentamt**

**European Patent Office**

**Office européen des brevets**

(19)

(11) Veröffentlichungsnummer: **0 033 886**
**B2**

(12)
# NEUE EUROPÄISCHE PATENTSCHRIFT

(45) Veröffentlichungstag der neuen Patentschrift:
**11.05.88**

(51) Int. Cl.⁴: **B 23 B 31/00,** B 23 Q 11/00

(21) Anmeldenummer: **81100547.9**

(22) Anmeldetag: **26.01.81**

(54) Vorrichtung zur Einstellung von zwei einen Spannhub begrenzenden Endspannpositionen.

(30) Priorität: **11.02.80 DE 3004988**

(43) Veröffentlichungstag der Anmeldung:
**19.08.81 Patentblatt 81/33**

(45) Bekanntmachung des Hinweises auf die Patenterteilung:
**28.09.83 Patentblatt 83/39**

(45) Bekanntmachung des Hinweises auf die Entscheidung
über den Einspruch:
**11.05.88 Patentblatt 88/19**

(84) Benannte Vertragsstaaten:
**AT CH FR GB IT LI SE**

(56) Entgegenhaltungen:
**DD - A - 142 854**
**DE - A - 1 752 599**
**DE - A - 2 256 190**
**DE - A - 2 711 862**
**DE - A - 2 711 908**
**DE - B - 2 436 529**
**US - A - 3 760 489**

**Spannwegendlagenüberwachung für
Index-Hohlspannzylinder, Schreiben der Fa.
INDEX-Werke KG, 16.5.79, 305/621 Ka**

(73) Patentinhaber: **Gildemeister AG, Morsestrasse 1,
D-4800 Bielefeld (DE)**

(72) Erfinder: **Buchholz, Albert, Hirtenplatz 7,
D-3012 Langenhagen (DE)**
Erfinder: **Hesse, Werner, Rotkamp 19,
D-3002 Wedemark 1 (DE)**
Erfinder: **Möller, Günther, Birkenweg 39,
D-3012 Langenhagen 8 (DE)**

(74) Vertreter: **Schmidt-Evers, Jürgen, Dipl.-Ing. et al,
Patentanwälte Dipl.-Ing. H. Mitscherlich Dipl.-Ing. K.
Gunschmann Dipl.-Ing. Dr.rer.nat. W. Körber Dipl.-Ing. J.
Schmidt-Evers Dipl.-Ing. W. Meizer
Steinsdorfstrasse 10, D-8000 München 22 (DE)**

EP 0 033 886 B2

ACTORUM AG

## Beschreibung

Bei einem Spannaggregat, insbesondere einem Spannfutter mit auswechselbaren Spannbacken ist die eine Endspannposition erreicht, wenn sich die Spannbacken beim Öffnen dem Wechselbereich nähern. Die andere Endspannposition wird dann erreicht, wenn sich die Spannbacken beim Schliessen der Stelle nähern, wo sie nicht mehr weiter bewegt werden können. Beide Endspannpositionen müssen von der Ausraststellung bzw. von der Stoppstellung jedoch noch soweit entfernt sein, dass noch ein Nachspannhub verbleibt, der ein sicheres Spannen auch noch in den Endspannpositionen gewährleistet. Die Endspannpositionen sind nun bei verschiedenen grossen Spannfuttern unterschiedlich, ebenso die Spannhübe.

Soll in ein Spannfutter ein Werkstück eingespannt werden, dessen Abmessungen den durch die Endspannpositionen definierten Spannbereich über- oder unterschreiten, so ist ein ordnungsgemässes Spannen nicht mehr gewährleistet und es besteht die Gefahr, dass das Werkstück oder die Spannbacken beim Anlaufen der Maschine weggeschleudert werden und Schaden anrichten.

Aus diesem Grunde wurde bereits eine Vorrichtung entwickelt (DE A 1 752 599), mit der überwacht werden kann, ob sich die Spannbacken noch innerhalb des durch die Endspannpositionen definierten Spannbereiches befinden. Wenn festgestellt wird, dass dies nicht mehr der Fall ist, so kann die Maschine nicht anlaufen. Bei dieser bekannten Vorrichtung ist mit dem Kolben des Verstellzylinders für die Spannbacken eine Trägerstange für ein Geberelement verbunden. Bei einer Spannhubverstellung verschiebt sich die Trägerstange und mit ihr das Geberelement. Parallel zur Trägerstange sind zwei Führungen in Form von Gewindebolzen angeordnet, die durch Rändelmuttern drehbar sind. Auf jedem der beiden Gewindebolzen sitzt ein Sensor. Durch Drehen der Rändelmuttern sind die Sensoren auf den Gewindebolzen verschiebbar. Das Geberelement ist, in Längsrichtung der Trägerstange gemessen, kürzer als der Abstand der Sensoren. Durch die Verstellung der Sensoren auf den Gewindebolzen soll eine Anpassung an verschiedene Spannfutter möglich sein. Möglich ist auch die Anpassung des Spannhubes an ein bestimmtes Werkstück innerhalb des maximal zulässigen Spannhubes. Es hat sich jedoch in der Praxis herausgestellt, dass bisweilen eine falsche Einstellung der bekannten Vorrichtung bei einem Spannfutterwechsel nicht ausgeschlossen werden kann. Damit ist der angestrebte Erfolg in Frage gestellt. Es besteht also ein Sicherheitsrisiko.

Letzteres wird vermieden mit einer infolge einer schriftlichen Beschreibung zum Stand der Technik gehörenden Vorrichtung mit der Bezeichnung «Spannwegendlagenüberwachung für Index-Hohlspannzylinder», bei der ebenfalls mit dem Kolben des Spannzylinders für das Spannaggregat eine Trägerstange verbunden ist. Diese Trägerstange dient zur Halterung eines als Geberelement wirkenden Ringes. Längs des Verschiebeweges der Trägerstange und des von ihr mitgenommenen Ringes ist ein induktiv auf den Ring ansprechender Sensor angeordnet, der werkseitig eingestellt wird. Jedem Spannaggregat ist ein Ring zugeordnet, der mit dem Spannaggregat ausgetauscht wird. Die einzelnen Ringe unterscheiden sich durch ihre in Verschieberichtung gemessene Breite. Die Breite der Ringe ist grösser als die Breite des Sensors. Der Sensor signalisiert das Erreichen einer Endspannposition, wenn der betreffende Ring in der einen oder der anderen Richtung aus dem Ansprechbereich des Sensors herausgeschoben ist. Eine Verminderung des Spannhubes unter den durch die Breite des Ringes vorgegebenen maximalen Spannhub und damit eine Anpassung des Spannhubes an bestimmte Werkstücke ist bei dieser bekannten Vorrichtung nicht möglich.

Der Erfindung liegt die Aufgabe zugrunde, eine Vorrichtung zur Einstellung von zwei einen Spannhub begrenzenden Endspannpositionen der durch einen Kraftantrieb verstellbaren Spannbacken eines auswechselbaren Werkstück-Spannaggregates einer Werkzeugmaschine sowie zur Feststellung des Erreichens dieser Endspannpositionen, zu schaffen, mit der eine Anpassung der Spannwege an die zu fertigenden Werkstücke ohne Sicherheitsrisiko möglich ist.

Eine erste Ausführungsform der Erfindung geht von der unter der Bezeichnung «Spannwegendlagenüberwachung für Index-Hohlspannzylinder» bekannt gewordenen Vorrichtung aus. Sie betrifft demnach eine Vorrichtung zur Einstellung von zwei einen Spannhub begrenzenden Endspannpositionen der durch einen Kraftantrieb verstellbaren Spannbacken eines auswechselbaren Werkstück-Spannaggregates einer Werkzeugmaschine sowie zur Feststellung des Erreichens dieser Endspannpositionen, mit je einem Geberelement, welches auf einer durch den Kraftantrieb verschiebbaren Trägerstange angeordnet ist und mit einem parallel zu der Trägerstange verschiebbar angeordneten Sensor, der auf Annäherung oder Kontakt des Geberelementes reagiert, wobei jedem Spannaggregat mindestens ein spezifisches Teil zum Festlegen der Endspannpositionen zugeordnet ist, welches mit dem Spannaggregat auswechselbar ist.

Die Aufgabe ist gemäss dieser ersten Ausführungsform der Erfindung dadurch gelöst, dass ein weiterer parallel zu der Trägerstange verschiebbar angeordneter Sensor vorgesehen ist, dass jedem Spannaggregat als spezifische Teile auswechselbare Anschlagelemente für die verschiebbar angeordneten Sensoren zugeordnet sind, die eine von der Spannhubverstellung unabhängige Verstellung der Endspannpositionen durch Verändern der wirksamen Länge des Sensorabstandes und somit eine Änderung gegenüber der den maximal zulässigen Spannhub bestimmenden Grundabstandsgrösse im Sinne einer Spannhubverringerung zulassen, dass das Geberelement länger als der in Längsrichtung der Trägerstange gemessene Abstand der Sensoren ist, wenn sich diese in Anschlagstellung befinden, und dass die Werkzeugmaschine nur bei Ansprechen beider Sensoren in Betrieb setzbar ist. Eine praktische Ausgestaltung der ersten Ausführungsform kann darin bestehen, dass jeder Sensor auf einer sich parallel zu der Trägerstange erstreckenden Führung angeordnet ist, und dass für jede Führung auswechselbare Anschlagelemente vorgesehen sind. Eine Weiterbildung kann ferner darin bestehen, dass von den beiden Anschlagelementen der zwei Führungen ausgehend Verstellungen der zugeordneten Sensoren in entgegengesetzter Richtung möglich sind, wodurch der Spannhub verminderbar ist. Die Führungen können von Führungsstangen gebildet sein, die Anschlagelemente können von den Absatzschultern abgesetzter auf die Führungsstange aufzuschiebender Hülsen gebildet sein, auf deren dünnerem Abschnitt die Sensoren verschiebbar angeordnet sind.

Zur Vermeidung, dass die Hülsen auf die falschen Führungsstangen geschoben werden, wird weiterhin vorgeschlagen, dass die Hülsen und/oder Führungsstangen mit Sperrmitteln versehen sind, welche das Aufschieben einer Hülse auf eine dieser nicht zugeordneten Führungsstange ausschliessen.

Eine zweite Ausführungsform der Erfindung geht ebenfalls aus von der unter der Bezeichnung «Spannwegendlagenüberwachung für Index-Hohlspannzylinder» bekannt gewordenen Vorrichtung. Demnach betrifft diese zweite Ausführungsform eine Vorrichtung zur Einstellung von zwei einen Spannhub begrenzenden Endspannpositionen der durch einen Kraftantrieb verstellbaren Spannbacken eines auswechselbaren Werkstück-Spannaggregates einer Werkzeugmaschine sowie zur Feststellung des Erreichens dieser Endspannpositionen, mit einem Geberelement, welches auf einer durch den Kraftantrieb verschiebbaren Trägerstange angeordnet ist, und mit einem längs des Verschiebeweges des Geberelementes angeordneten Sensor, der auf Annäherung oder Kontakt des Geberelementes reagiert, wobei das Geberelement auswechselbar und jedem Spannaggregat ein Geberelement mit einer die Endspannpositionen bestimmenden Grundlänge zugeordnet ist.

Die oben angegebene Aufgabenstellung wird mit dieser zweiten Ausführungsform dadurch gelöst, dass längs des Verschiebeweges des Geberelementes ein weiterer auf Annäherung oder Kontakt des Geberelementes reagierender Sensor angeordnet ist, dass das Geberelement länger als der in Längsrichtung der Trägerstange gemessene Abstand der Sensoren ist, dass das Geberelement eine von der Spannhubverstellung unabhängige Verstellung der Endspannpositionen durch Verändern der wirksamen Länge des Geberelementes und somit eine Änderung gegenüber der den maximal zulässigen Spannhub bestimmenden Grundabstandsgrösse im Sinne einer Spannhubverringerung zulässt, und dass die Werkzeugmaschine nur bei Ansprechen beider Sensoren in Betrieb setzbar ist.

Eine zweckmässige Ausgestaltung dieser zweiten Ausführungsform kann darin bestehen, dass das Geberelement aus zwei in Längsrichtung der Trägerstange hintereinander angeordneten teleskopisch ineinandergreifenden Teilen besteht, die aus einer Anschlagstellung heraus im Sinne einer Verkürzung des Geberelementes aufeinander zu verstellbar sind, um ggf. den Sapnnhub zu vermindern.

Eine dritte Ausführungsform der Erfindung geht wiederum aus von der unter der Bezeichnung «Spannwegendlagenüberwachung für Index-Hohlspannzylinder» bekannt gewordenen Vorrichtung zur Einstellung von zwei einen Spannhub begrenzenden Endspannpositionen der durch einen Kraftantrieb verstellbaren Spannbacken eines auswechselbaren Werkstück-Spannaggregates einer Werkzeugmaschine sowie zur Feststellung des Erreichens dieser Endspannpositionen, mit je einem Geberelement welches auf einer durch den Kraftantrieb verschiebbaren Trägerstange angeordnet ist und mit einem längs des Verschiebeweges des Geberelementes angeordneten Sensor, wobei jedem Spannaggregat mindestens ein spezifisches Teil zum Festlegen der Endspannpositionen zugeordnet ist, welches mit dem Spannaggregat auswechselbar ist.

Die Aufgabenstellung wird gemäss dieser dritten Ausführungsform der Erfindung durch gelöst, dass ein weiterer längs des Verschiebeweges des Geberelementes angeordneter Sensor vorgesehen ist, dass jedem Spannaggregat als spezifisches Teil eine auswechselbare Sensorenanordnung mit bestimmtem Sensorabstand zugeordnet ist, die eine von der Spannhubverstellung unabhängige Verstellung der Endspannpositionen durch Verändern der wirksamen Länge des Sensorabstandes und somit eine Änderung gegenüber der dem maximal zulässigen Spannhub bestimmenden Grundabstandsgrösse im Sinne einer Spannhubverringerung zulässt, dass das Geberelement kürzer als der in Längsrichtung der Trägerstange gemessene Abstand der Sensoren ist, und dass der Kraftantrieb nur in Betrieb setzbar ist, wenn keiner der beiden Sensoren anspricht.

Es sei in diesem Zusammenhang darauf hingewiesen, dass die Anordnung von zwei Sensoren in Verbindung mit einem Geberelement, dessen wirksame Länge kürzer als der Sensorabstand ist, bereits zum Stand der Technik gehört (DE-A 1 752 599, Fig. 1).

Eine zweckmässige Ausgestaltung der dritten Ausführungsform kann darin bestehen, dass diese Sensoren aus einer Anschlagstellung heraus aufeinander zu verstellbar sind. Den drei vorstehend beschriebenen Ausführungsformen ist gemeinsam, dass mindestens ein spezifisches Teil der Geber- und/oder der Sensoranordnung mit dem Spannaggregat ausgewechselt wird.

Dies ist bei der nachfolgend beschriebenen vierten Ausführungsform der Erfindung nicht der Fall. Die vierte Ausführungsform geht von der zuerst beschriebenen bekannten Vorrichtung (DE-A 1 752 599) aus. Sie betrifft demnach eine Vorrichtung zur Einstellung von zwei einen Spannhub begrenzenden Endspannpositionen der durch einen Kraftantrieb verstellbaren Spannbacken eines auswechselbaren Werkstück-Spannaggregates einer Werkzeugmaschine sowie zur Feststellung des Erreichens dieser Endspannpositionen, bestehend aus einer Geber- und einer Sensoranordnung, die auf Annäherung oder Kontakt reagieren und deren Abstand mit der Spannbackenverstellung veränderbar ist.

Die der Erfindung zugrundeliegende Aufgabenstellung wird gemäss dieser vierten Ausführungsform dadurch gelöst, dass jedem Spannaggregat mindestens ein spezifisches Teil der Geber- und/oder Sensoranordnung zum Festlegen der Endspannpositionen zugeordnet ist, welches mit dem Spannaggregat automatisch in Funktion setzbar ist.

Geht man davon aus, dass auch die bekannte Vorrichtung (DE-A 1 752 599) mit einer durch den Kraftantrieb verschiebbaren Trägerstange für ein Geberelement und zwei längs des Verschiebeweges des Geberelementes angeordneten Sensoren versehen ist, so kann eine praktische Realisierung der vierten Ausführungsform der Erfindung darin bestehen, dass längs des Verschiebeweges weitere Sensoren angeordnet sind, von denen jeweils zwei bestimmte für jedes eingewechselte Spannaggregat automatisch auswählbar sind. Dazu kann jedes Spannaggregat mit einem Codegeber versehen sein, dessen Code durch einen Codeleser auslesbar ist, welcher seinerseits eine Auswahlschaltung für die Sensoren steuert.

Die Sensoren können konzentrisch um die Trägerstange angeordnet sein. So kann die Trägerstange beispielsweise in einer zylindrischen Trommel axial verschiebbar angeordnet sein. Auf der Trommel können dann Halter für die Sensoren befestigt sein.

Eine fünfte Ausführungsform der Erfindung geht ebenfalls von der zuerst beschriebenen bekannten Vorrichtung (DE-A 1 752 599) aus. Sie betrifft demnach eine Vorrichtung zum Einstellen von zwei einen Spannhub begrenzenden Endspannpositionen der durch einen Kraftantrieb verstellbaren Spannbacken eines auswechselbaren Werkstück-Spannaggregates einer Werkzeugmaschine sowie zur Feststellung des Erreichens dieser Entspannungspositionen.

Die Aufgabenstellung der Erfindung ist gemäss dieser fünften Ausführungsform gelöst durch einen bei der Spannbackenverstellung mitverstellten Spannungspositions-Istwertgeber, durch einen Spannungspositions-Sollwertgeber für die weiteste und die engste Spannposition, und durch einen mit dem Istwertgeber und dem Sollwertgeber verbundenen Komparator, der bei Feststellung einer Übereinstimmung von Soll- und Istwert ein Sperrsignal für die Werkzeugmaschine erzeugt. Dieser Lösungsvorschlag eignet sich besonders für eine Werkzeugmaschine mit numerischer Steuerung.

Eine Weiterbildung der fünften Ausführungsform kann darin bestehen, dass jedes Spannaggregat mit einem Codegeber versehen ist, dessen Code durch einen Codeleser auslesbar ist, dass von einer Programmsteuerung für die Werkzeugmaschine ein Sollcode ausgegeben wird, und dass ein weiterer Komparator vorgesehen ist, der den vom Codeleser ausgelesenen Code mit dem Sollcode vergleicht und bei Abweichung ein Sperrsignal für die Werkzeugmaschine erzeugt.

Der Spannpositions-Istwertgeber kann ein mit der Kolben-Zylinder-Anordnung gekoppeltes lineares Messglied sein, das als berührungslose Geber-Sensor-Anordnung arbeitet. Der Spannpositions-Istwert eignet sich gut dazu, als Prüfwert für das Werkstück ausgewertet zu werden.

Allen fünf Ausführungsformen ist gemeinsam, dass die Bedienungsperson der Maschine keine Überlegungen mehr anstellen soll, in welcher Richtung die Sensoren bzw. Geber bei einem Wechsel des Spannaggregates verstellt werden müssen, weil bei derartigen Überlegungen Fehler entstehen könnten. Statt dessen soll die Anpassung der Vorrichtung an ein neu einzuwechselndes Spannaggregat lediglich in einem schematischen Auswechseln eines oder mehrerer Teile bestehen oder überhaupt automatisch erfolgen. Ein nachträgliches Verstellen im Sinne eines verringerten Spannhubes soll dabei zulässig sein, weil damit kein Sicherheitsrisiko verbunden ist. Durch das Verstellen kann auch ein ganz bestimmter Spannhub gewählt werden, der innerhalb der Sicherheitsgrenzen liegt. Dieser Spannhub kann an die Abmessungen eines beispielsweise in Serie gefertigten Werkstückes so angepasst werden, dass möglichst geringe Spannwege und damit ein möglichst geringer Zeitaufwand für das Ein- und Ausspannen gewährleistet sind. Durch die Begrenzung der maximalen Spannpositionen kann ausserdem gewährleistet werden, dass die treppenartigen Absätze der Spannbacken einen Anschlag beim Einschieben eines Werkstückes in das Spannfutter bilden.

Ausführungsbeispiele der Erfindung werden nachfolgend anhand der Zeichnungen beschrieben. Es zeigen

Fig. 1 eine Prinzipdarstellung von einer ersten Ausführungsform der erfindungsgemässen Lösung,

Fig. 2–3 zwei weitere Ausführungsformen, wobei nur der in strichpunktierten Linien eingerahmte Teil aus Fig. 1 in entsprechend geänderter Form dargestellt ist,

Fig. 4 eine Prinzipdarstellung einer eine automatische Alternative betreffenden Ausführungsform,

Fig. 5 einen Längsschnitt (V–V) in Fig. 6, durch einen Spannzylinder mit Überwachungsvorrichtung gemäss der ersten Ausführungsform,

Fig. 6 eine Ansicht von links auf die in Fig. 5 dargestellte Vorrichtung,

Fig. 7 einen Schnitt (VII–VII) durch Fig. 6,

Fig. 8 eine Teilansicht der Vorrichtung mit einer praktischen Realisierung der zweiten Ausführungsform,

Fig. 9 wie Fig. 8, jedoch mit ausgewechselten Teilen,

Fig. 10 einen Längsschnitt durch eine Vorrichtung der automatischen Alternative,

Fig. 11 einen Querschnitt durch Fig. 10,

Fig. 12 ein Spannfutter mit einem Codegeber sowie einen Codeleser für die automatische Version,

Fig. 13 eine Prinzipdarstellung einer weiteren Ausführungsform, die mit numerischer Steuerung arbeitet.

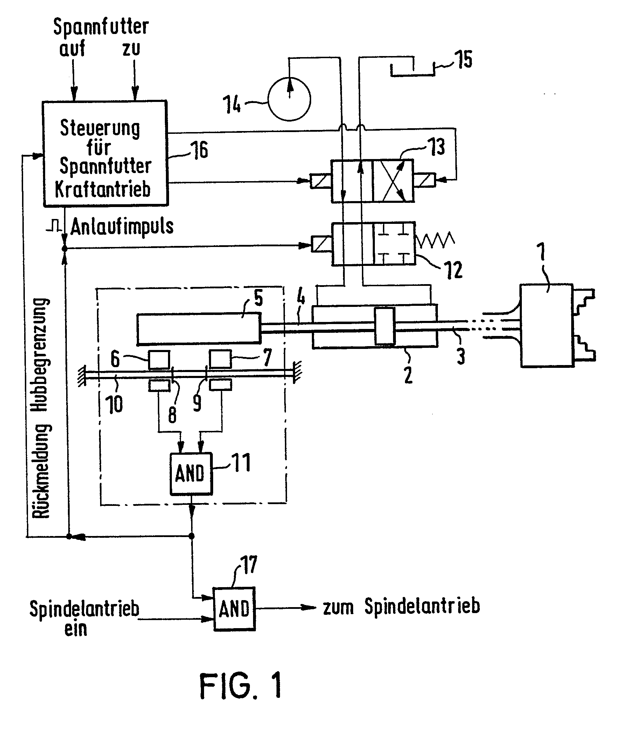

Fig. 1 zeigt das Spannfutter 1 einer Drehmaschine. Zum Verstellen der Backen des Spannfutters dient ein Spannzylinder 2, der über eine Stange 3 mit dem Spannfutter 1 verbunden ist. An einer sich zur anderen Seite erstreckenden Stange 4 sitzt ein zylindrisches Geberelement 5. Im Verschiebebereich des Geberelementes 5 sind zwei Sensoren 6 und 7 angeordnet. Die beiden Sensoren sind auf einer Stange 10 verschiebbar angeordnet. Der Verschiebebereich der beiden Sensoren 6 und 7 ist durch Anschläge 8 und 9 begrenzt. Von der Anschlagstellung aus können die beiden Sensoren 6 und 7 voneinander weg verschoben werden. Der Spannzylinder 2 wird über zwei hintereinander geschaltete Ventile 12 und 13 mit einem Druckmittel versorgt, das von einer Druckmittelpumpe 14 kommt. Ein Druckmittelsumpf ist mit 15 bezeichnet. Das Ventil 12 befindet sich normalerweise in Schliessstellung. Nur wenn beide Sensoren 6 und 7 auf den Geber 5 ansprechen, erzeugt eine AND-Schaltung 11 ein Öffnungssignal für das Ventil 12. In diesem Fall kann der Spannzylinder 2 verschoben werden. Die Verschieberichtung wird durch ein von der Steuerung 16 für den Spannfutterkraftantrieb abgegebenes Verstellsignal bestimmt. Der Steuerung 16 wird das Überschreiten des vorgeschriebenen Hubes von der AND-Schaltung 11 rückgemeldet. Wenn der Kraftantrieb nach Umschalten des Ventils 12 in Schliessstellung erneut in Betrieb gesetzt werden soll, so gibt die Steuerung 16 an das Ventil 12 einen Öffnungsimpuls.

Wenn die Spannbacken des Spannfutters 1 sich in ihrer Schliess-Endspannposition befinden, so hat der Kolben des Spannzylinders 2 eine am weitesten rechte Position. In dieser Schliess-Endspannposition spricht der Sensor 6 gerade auf das linke Ende des Geberelementes 5 an. Der Sensor 7 befindet sich über dem mittleren Bereich des Geberelementes 5 und spricht ebenfalls an. Nunmehr werden der Kolben und das Geberelement 5 nach links verschoben. In der Öffnungsendspannposition spricht der Sensor 7 gerade noch auf das rechte Ende des Geberelementes 5 an.

Das Ausgangssignal der AND-Schaltung 11 wird ferner dem einen Eingang einer weiteren AND-Schaltung 17 zugeführt, deren anderem Eingang das Einschaltsignal für den Spindelantrieb zugeführt wird. Der Ausgang der weiteren AND-Schaltung 17 führt zum Spindelantrieb. Auf diese Weise wird bewirkt, dass der Spindelantrieb nur dann eingeschaltet werden kann, wenn sich die Spannbacken innerhalb des vorgeschriebenen Hubbereiches befinden, d.h. also, wenn sich das Geberelement 5 nicht aus dem Ansprechbereich eines der Sensoren 6, 7 heausbewegt.

Wenn nun gewünscht wird, dass das Spannfutter bei jeder Werkzeugaufnahme nicht bis in die Öffnungs-Endspannposition fahren soll, so kann der Spannhub dadurch vermindert werden, dass man den Sensor 7 auf der Stange 10 nach rechts verschiebt.

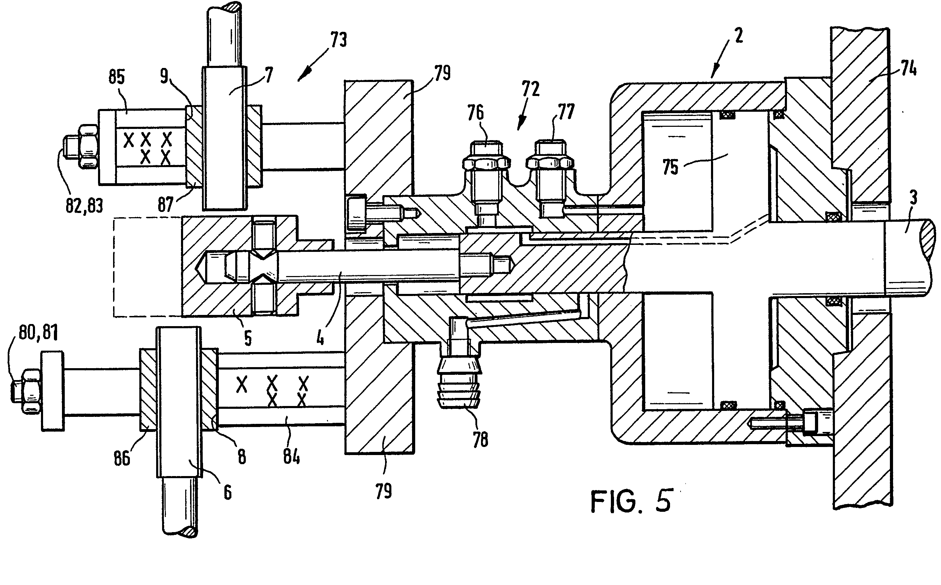

Wenn das Spannfutter 1 gegen ein anderes ausgewechselt wird, dass andere Endspannpositionen hat, so kann die Vorrichtung an dieses neu eingewechselte Spannfutter dadurch angepasst werden, dass die Anschläge 8 und 9 gegen andere Anschläge ausgewechselt weden. Wie dies praktisch geschehen kann, wird im Zusammenhang mit den Fig. 5 bis 7 erläutert.

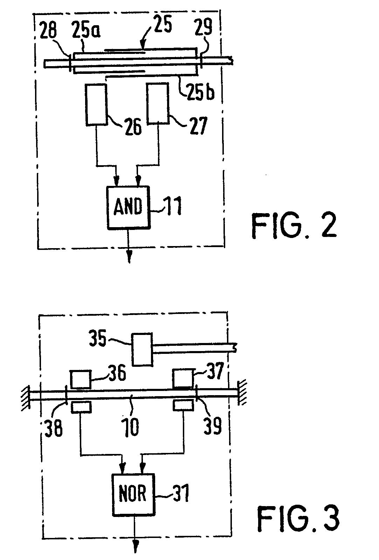

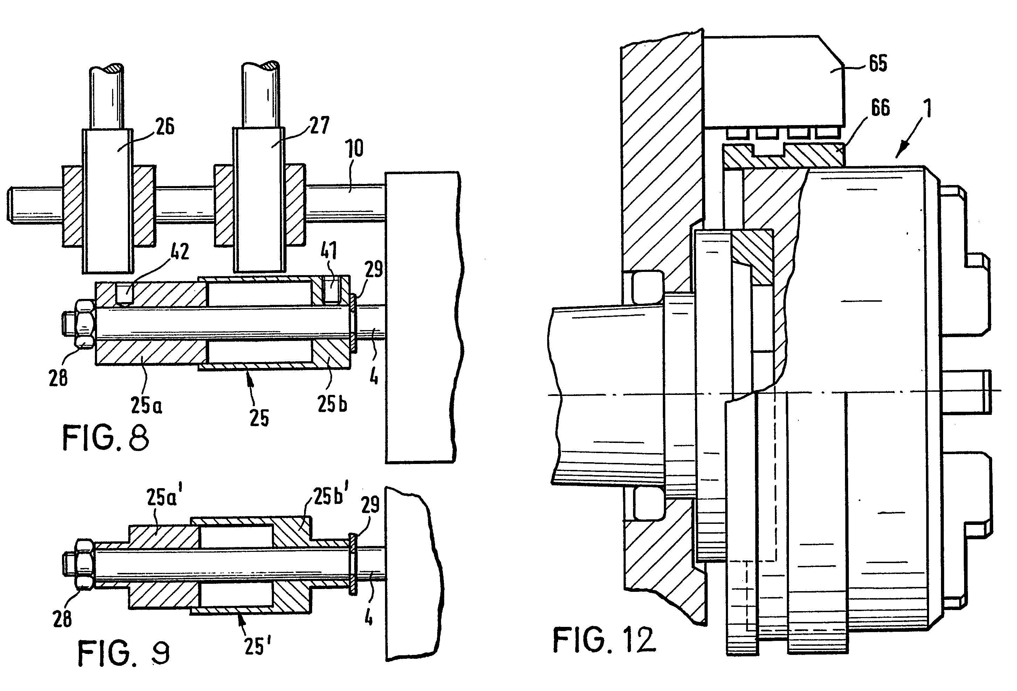

Bei der in Fig. 2 gezeigten Ausführungsform sind die Sensoren 26, 27 fest angeordnet. Das Geberelement 25 besteht hier aus zwei auf der Stange 4 verschiebbar angeordneten Hülsen 25a, 25b, die teleskopisch ineinandergreifen. Die Endpositionen der beiden Hülsen 25a, 25b sind durch Anschläge 28 und 29 festgelegt. Bei einem Wechsel des Spannfutters 1 können die Anschläge 28, 29 gewechselt werden. Wie im Zusammenhang mit den Fig. 8 und 9 gezeigt ist, ist es aber auch möglich, die Hülsen 25a, 25b zu wechseln, wobei die Länge der Hülsen durch Absätze variiert wird.

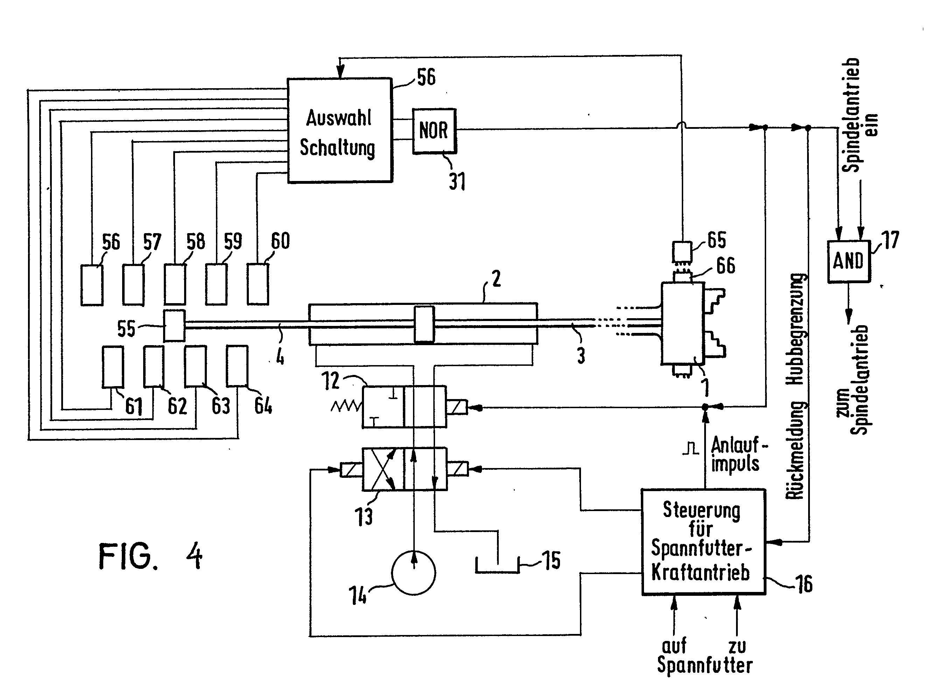

Bei der Ausführungsform in Fig. 3 ist auf der Stange 4 ein kurzes Geberelement 35 fest angeordnet. Auf der Stange 10 sind wiederum Sensoren 36, 37 verschiebbar angeordnet. Die Verschiebebereiche der Sensoren 36, 37 sind durch Anschläge 38, 39 begrenzt. Die Anschläge 38, 39 lassen ein Verschieben der Sensoren 36, 37 gegeneinander zu. Das Ventil 12 wird geöffnet, wenn keiner der beiden Sensoren 36, 37 anspricht. Dazu sind die beiden Sensoren 36, 37 mit einer NOR-Schaltung 31 verbunden, welche das Ventil 12 steuert. Der Sensor 37 bestimmt die Schliess-Endspannstellung. Der Sensor 36 bestimmt die Öffnungsendspannstellung. Bei einem Wechsel des Spannfutters 1 können die Anschläge 38, 39 gewechselt werden.

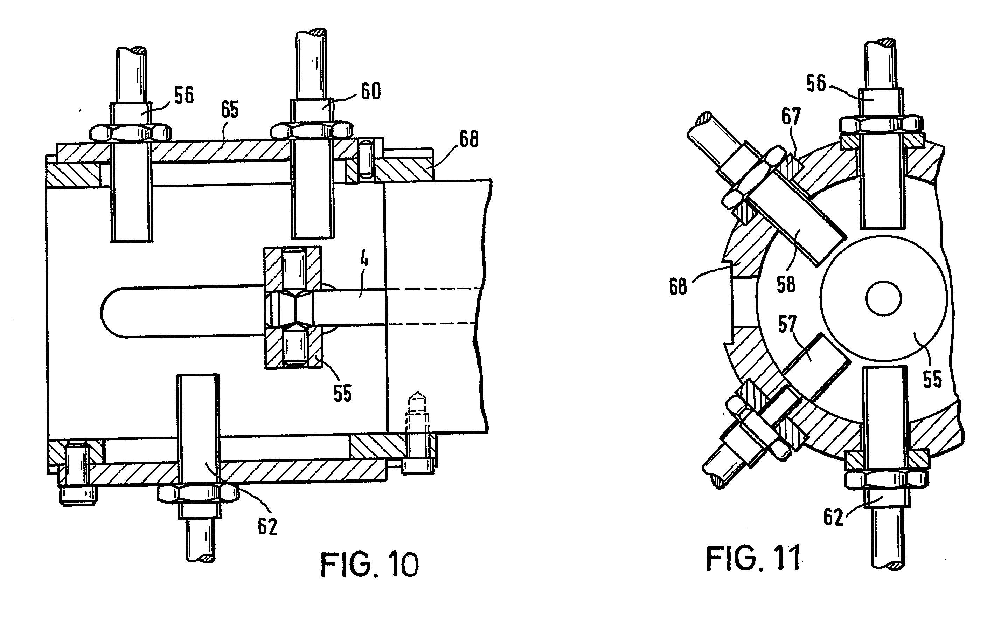

Bei der in Fig. 4 dargestellten automatischen Version ist auf der Stange 4 ein kurzes Geberelement 55 fest angeordnet. Im Verschiebebereich des Geberelementes 55 befinden sich eine Vielzahl von fest angeordneten Sensoren 56–64. Die Sensoren sind mit einer Auswahlschaltung 156 verbunden. An jedem Spannfutter 1 befindet sich ein Codegeber 66, der mit einem Codeleser 65 berührungslos korrespondiert. Der Codeleser 65 gibt dann der Auswahlschaltung ein dem ausgelesenen Code entsprechendes Signal. Die Auswahlschaltung 54 wählt zwei der Sensoren 56–64 entsprechend dem ausgelesenen Signal aus und schaltet die von den Sensoren gelieferten Signale an die NOR-Schaltung 31. Diese steuert, wie beschrieben, das Ventil 12. Ein Wechsel ist hier nicht vorzunehmen. Die dem jeweiligen Spannfutter 1 zugeordneten Sensoren werden hier vielmehr automatisch ausgewählt und in Funktion gesetzt. Eine praktische Realisierung wird nachfolgend noch im Zusammenhang mit den Fig. 10 bis 12 beschrieben. Die übrigen Schaltungsteile entsprechen denen in Fig. 1.

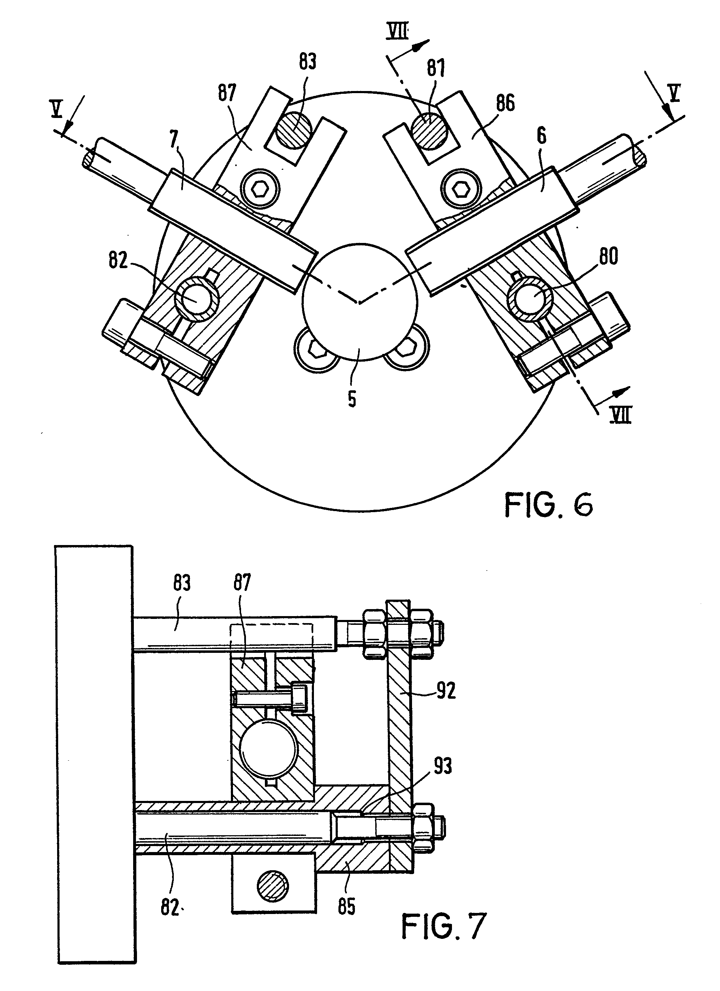

Fig. 5 zeigt einen Kraftspannzylinder 2, einen Druckmittelverteiler 72 und die Überwachungsvorrichtung 73. Der Kraftspannzylinder 2 ist an der Wand 74 eines Spindelgehäuses angeflanscht. Sein Kolben 75 ist einerseits über eine Zugstange 3 mit dem Spannfutter verbunden und ragt andererseits in ein Verteilergehäuse 72, durch das das Druckmittel zum Zylinder geleitet wird. Derartige Druckmittelverteiler sind bekannt und daher nur schematisch angedeutet. Sie verfügen über je einen Druckmittelanschluss 76, 77 für das Spannen und Entspannen sowie ggf. über eine Leckölleitung 78. In den in das Verteilergehäuse 72 ragenden Ansatz des Kolbens 75 ist eine Stange 4 eingeschraubt, die aus dem Verteilergehäuse 72 herausragt und auf der das Geberelement 5 unverschieblich befestigt ist. Am Druckmittelverteiler 72 ist eine Halteplatte 79 befestigt, die zwei Führungssäulenpaare 80, 81 und 82, 83 trägt. Auf je eine der Führungssäulen 80, 82 ist eine abgesetzte Hülse 84, 85 aufgeschoben, die ihrerseits eine Sensoraufnahme 86, 87 trägt. Wie aus den Fig. 7 und 8 ersichtlich ist, sind die Sensoraufnahmen 86, 87 an zwei Stellen geschlitzt, so dass sie auf den dünneren Abschnitten der Hülsen und in ihnen die Sensoren geklemmt werden können. Die Absätze der Hülsen bilden Anschläge 8 und 9 für die Sensoraufnahmen 86, 87.

In Fig. 6 ist ausserdem erkennbar, dass die Sensoraufnahmen 86, 87 sich gegen Verdrehung an der jeweils zweiten Führungssäule 81, 83 abstützen. In dem dargestellten Beispiel sind die Sensoren senkrecht zu den Führungssäulen angeordnet.

Entsprechend Fig. 7 sind die beiden Führungssäulen 80, 81 bzw. 82, 83 jedes Paares durch einen Steg 92 versteift, der gleichzeitig die Hülse 85 in ihrer Lage fixiert. In Fig. 7 ist ausserdem der Absatz 93 erkennbar, der ein falsches Aufschieben der Hülse auf die Führungssäule verhindert.

Zum Einrichten eines Spannfutters auf ein neues Werkstück wird ein Probestück im Spannfutter gespannt. Der Sensor 6 wird mittels seiner Aufnahme 86 nun so verschoben, dass er gerade noch auf das Geberelement 5 anspricht. Danach wird der Sensor 7 so eingestellt, dass das Spannfutter eine ausreichende Öffnung zum Einlegen der Werkstücke bietet. In der Regel wird zum Öffnen der volle Hub bis in die Endlage benutzt werden. Es kann mit dem Sensor 7 jedoch ein kürzerer Hub gewählt werden. Der Sensor 7 bewirkt dann ein Schliessen der Druckmittelzuleitung und verhindert gleichzeitig ein Anlaufen der Maschinenspindel., Sprechen beide Sensoren 6 und 7 an, so ist eine ordnungsgemässe Spannung gegeben und die Spindel kann anlaufen. Sobald einer der beiden Sensoren 6, 7 entregt wird, wird der Antrieb der Spindel gesperrt. Die Sensoraufnahmen 86, 87 können nun nur bis zu den Schultern 8, 9 der Hülsen 84, 85 verschoben werden. Die Schultern begrenzen den zulässigen Spannbereich des zugehörigen Spannfutters. Eine Verschiebung der Sensoraufnahmen 86, 87 von den Schultern der Hülsen weg verkleinert den Spannhub und kann daher die Sicherheit nicht beeinträchtigen.

Die in den Fig. 8 und 9 gezeigte Ausführungsform entspricht der schematischen Darstellung in Fig. 2. Hinzuzufügen ist lediglich, dass die teleskopisch ineinandergreifenden Hülsen 25a, 25b mit Madenschrauben 41, 42 lösbar auf der Stange 4 befestigt sind. Die beiden Anschläge 28 und 29 sind einmal von einer Mutter und zum anderen von einem Sprengring gebildet. Das ausgetauschte Geberelement in Fig. 9 besteht aus zwei abgesetzten Hülsen 25a' und 25b'. Dadurch ist die für die Sensorwirkung wirksame Enge des Geberelementes 25' in Fig. 9 geringer als diejenige des Geberelementes 25 in Fig.8.

Die Ausführungsform in den Fig. 10 bis 12 entspricht der schematischen Darstellung in Fig. 4. Man erkennt, dass die Sensoren 56 bis 64 auf Sensorhaltern 67 befestigt sind. Die Sensorhalter 67 sind ihrerseits auf einer Trommel 68 befestigt und umgeben konzentrisch die Trommelachse. Entlang der Trommelachse verläuft die Stange 4, welche das Geberelement 55 trägt.

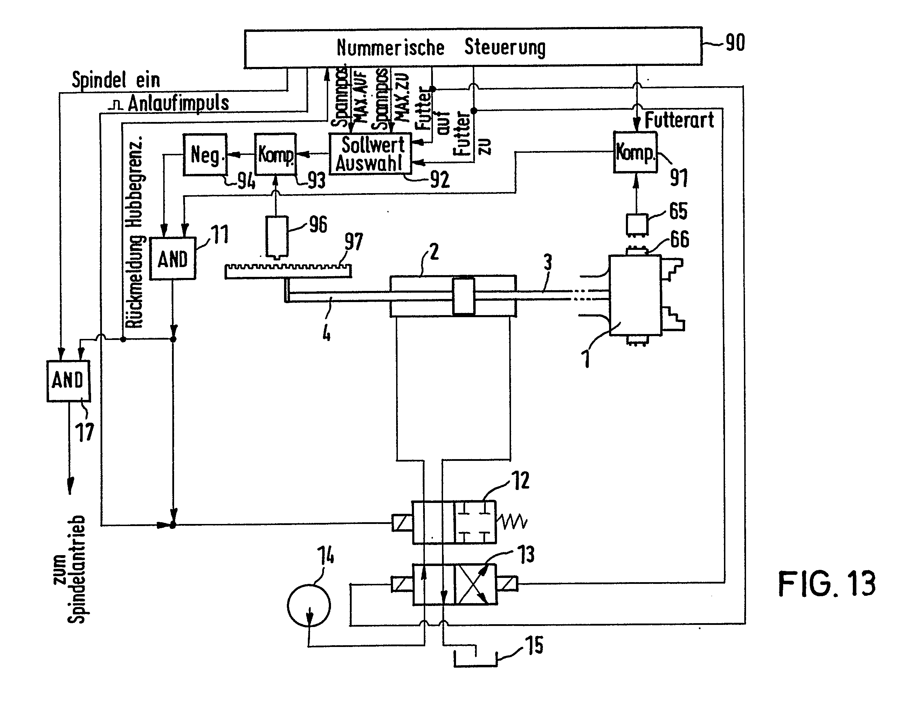

In Fig. 12 ist ein Futter 1 vergröbert dargestellt. Hier sind insbesondere der Codegeber 66 und der Codeleser 65 gut erkennbar. Der Codegeber 66 ist als Ring ausgebildet, der das Futter 1 konzentrisch umgibt.

In Fig. 13 ist die Stange 4 mit einem Positionsgeber 97 verbunden, der von einem Sensor 96 abgetastet wird. Eine numerische Steuerung 90 gibt an eine Sollwert-Auswahlschaltung 92 die beiden Hubbegrenzungswerte für das Spannfutter. Ferner gibt die numerische Steuerung die Signale zur Steuerung der Verschieberichtung des Kraftantriebes an das Ventil 13. Diese Signale werden der Sollwert-Auswahlschaltung 92 zugeführt. Diese gibt je nachdem, ob das Futter geöffnet oder geschlossen werden soll, nur den Wert für die maximale oder den Wert für die minimale Spannposition an einen Komparator 93 weiter, dem ebenfalls die vom Sensor 96 ausgelesene Istwert-Position des Spannfutters zugeführt wird. Wenn der Komparator 93 eine Übereinstimmung feststellt, so gibt er ein Signal ab. Dieses wird einer Negationsschaltung 94 zugeführt, an deren Ausgang dann ein Signal auftritt, wenn an ihrem Eingang kein Signal erscheint. Die numerische Steuerung 90 gibt an einen weiteren Komparator 91 ferner ein Futterart-Sollsignal ab, das mit dem vom Codeleser 66 ausgelesenen Futterart-Istsignal verglichen wird. Bei Übereinstimmungen gibt der weitere Komparator 91 ein Signal an den einen Eingang der AND-Schaltung 11, deren anderer Eingang das von der Negationsschaltung 94 erzeugte Signal zugeführt wird. Die AND-Schaltung 11 erzeugt also hier für das Ventil 12 ein Öffnungssignal, wenn das in der Maschine befindliche Futter demjenigen entspricht, das von der numerischen Steuerung 90 vorgeschrieben wird, und wenn sich die Spannbacken innerhalb des vorgeschriebenen Hubbereiches befinden. Die übrigen Schaltungsteile sind wie in Fig. 1.

Es soll abschliessend noch bemerkt werden, dass die oben bechriebenen elektrischen und pneumatischen Schaltungsteile nur das Grundprinzip der Erfindung verdeutlichen sollen.

## Patentansprüche

1. Vorrichtung zur Einstellung von zwei einen Spannhub begrenzenden Endspannpositionen der durch einen Kraftantrieb (2, 3) verstellbaren Spannbacken eines auswechselbaren Werkstück-Spannaggregates (1) einer Werkzeugmaschine sowie zur Feststellung des Erreichens dieser Endspannpositionen, mit je einem Geberelement (5), welches auf einer durch den Kraftantrieb verschiebbaren Trägerstange (4) angeordnet ist, und mit einem parallel zu der Trägerstange verschiebbar angeordneten Sensor (6), der auf Annäherung oder Kontakt des Geberelementes reagiert, wobei jedem Spannaggregat mindestens ein spezifisches Teil zum Festlegen der Endspannpositionen zugeordnet ist, welches mit dem Spannaggregat auswechselbar ist, dadurch gekennzeichnet, dass ein weiterer parallel zu der Trägerstange verschiebbar angeordneter Sensor (7) vorgesehen ist, dass jedem Spannaggregat als spezifische Teile auswechselbare Anschlagelemente (8, 9, 84, 85) für die verschiebbar angeordneten Sensoren (6, 7) zugeordnet sind, die eine von der Spannhubverstellung unabhängige Verstellung der Endspannpositionen durch Verändern der wirksamen Länge des Sensorabstandes und somit eine Änderung gegenüber der den maximal zulässigen Spannhub bestimmenden Grundabstandsgrösse im Sinne einer Spannhubverringerung zulassen, dass das Geberelemente länger als der in Längrichtung der Trägerstange gemessene Abstand der Sensoren ist, wenn sich diese in Anschlagstellung befinden, und dass die Werkzeugmaschine nur bei Ansprechen beider Sensoren in Betrieb setzbar ist (Fig. 1, 5 bis 7).

2. Vorrichtung nach Anspruch 1, dadurch gekennzeichnet, dass jeder Sensor (6, 7) auf einer sich parallel zu der Trägerstange (4) erstreckenden Führung (80-83) angeordnet ist, und dass für jede Führung auswechselbare Anschlagelemente (84, 85) vorgesehen sind.

3. Vorrichtung nach Anspruch 2, dadurch gekennzeichnet, dass von den beiden Anschlagelementen (8, 9, 84, 85) der zwei Führungen (80-83) ausgehende Verstellungen der zugeordneten Sensoren (6, 7) in entgegengesetzter Richtung möglich sind.

4. Vorrichtung nach Anspruch 3, dadurch gekennzeichnet, dass die Führungen (80-83) von Führungsstangen gebildet sind, und dass die Anschlagelemente von den Absatzschultern abgesetzter auf die Führungsstangen aufzuschiebender Hülsen (84, 85) gebildet sind, auf deren dünneren Abschnitt die Sensoren (6, 7) verschiebbar angeordnet sind.

5. Vorrichtung nach Anspruch 4, dadurch gekennzeichnet, dass die Hülsen (84, 85) und/oder Führungsstangen (80-83) mit Sperrmitteln versehen sind, welche das Aufschieben einer Hülse (84, 85) auf eine dieser nicht zugeordneten Führungsstange ausschliessen.

6. Vorrichtung zur Einstellung von zwei einen Spannhub begrenzenden Endspannpositionen der durch einen Kraftantrieb (2, 3) verstellbaren Spannbacken eines auswechselbaren Werkstück-Spannaggregates (1) einer Werkzeugmaschine sowie zur Feststellung des Erreichens dieser Endspannpositionen, mit einem Geberelement (25, 25'), welches auf einer durch den Kraftantrieb verschiebbaren Trägerstange (4) angeordnet ist, und mit einem längs des Verschiebeweges des Geberelementes angeordneten Sensor (26), der auf Annäherung oder Kontakt des Geberelementes reagiert, wobei das Geberelement auswechselbar und jedem Spannaggregat ein Geberelement mit einer die Endspannpositionen bestimmenden Grundlänge zugeordnet ist, dadurch gekennzeichnet, dass längs des Verschiebeweges des Geberelementes ein weiterer auf Annäherung oder Kontakt des Geberelementes reagierender Sensor (27) angeordnet ist, dass das Geberelement länger als der in Längsrichtung der Trägerstange gemessene Abstand der Sensoren ist, dass das Geberelement eine von der Spannhubverstellung unabhängige Verstellung der Endspannpositionen durch Verändern der wirksamen Länge des Geberelementes und somit eine Änderung gegenüber der den maximal zulässigen Spannhub bestimmenden Grundabstandsgrösse im Sinne einer Spannhubverringerung zulässt, und dass die Werkzeugmaschine nur bei Ansprechen beider Sensoren (26, 27) in Betrieb setzbar ist (Fig. 2, 8 bis 9).

7. Vorrichtung nach Anspruch 6, dadurch gekennzeichnet, dass das Geberelement aus zwei in Längsrichtung der Trägerstange (4) hintereinander angeordneten teleskopisch ineinandergreifenden Teilen (25a, 25b; 25a', 25b') besteht, die aus einer Anschlagstellung heraus im Sinne einer Verkürzung des Geberelementes (25, 25') aufeinander zu verstellbar sind.

8. Vorrichtung zur Einstellung von zwei einen Spannhub begrenzenden Endspannpositionen, der durch einen Kraftantrieb (2, 3) verstellbaren Spannbacken eines auswechselbaren Werkstück-Spannaggregates (1) einer Werkzeugmaschine sowie zur Feststellung des Erreichens dieser Endspannpositionen, mit einem Geberelement (35), welches auf einer durch den Kraftantrieb verschiebbaren Trägerstange (4) angeordnet ist, und einem längs des Verschiebeweges des Geberelementes angeordneten Sensor (36), wobei jedem Spannaggregat mindestens ein spezifisches Teil zum Festlegen der Endspannpositionen zugeordnet ist, welches mit dem Spannaggregat auswechselbar ist, dadurch gekennzeichnet, dass ein weiterer längs des Verschiebeweges des Geberelementes angeordneter Sensor (37) vorgesehen ist, dass jedem Spannaggregat als spezifisches Teil eine auswechselbare Sensoranordnung (36, 37) mit bestimmtem Sensorabstand zugeordnet ist, die eine von der Spannhubverstellung unabhängige Verstellung der Endspannpositionen durch Verändern der wirksamen Länge des Sensorabstandes und somit eine Änderung gegenüber der den maximal zulässigen Spannhub betimmenden Grundabstandsgrösse im Sinne einer Spannhubverringerung zulässt, dass das Geberelement kürzer als der in Längsrichtung der Trägerstange gemessene Abstand der Sensoren ist, und dass der Kraftantrieb nur in Betrieb setzbar ist, wenn keiner der Sensoren anspricht (Fig. 3).

9. Vorrichtung nach Anspruch 8, dadurch gekennzeichnet, dass die Sensoren (36, 37) aus einer Anschlagstellung heraus aufeinander zu verstellbar sind.

10. Vorrichtung zur Einstellung von zwei einen Spannhub begrenzenden Endspannpositionen der durch einen Kraftantrieb (2, 3) verstellbaren Spannbacken eines auswechselbaren Werkstück-Spannaggregates (1) einer Werkzeugmaschine sowie zur Feststellung des Erreichens dieser Endspannpositionen, bestehend aus einer Geber- und einer Sensoranordnung, die auf Annäherung oder Kontakt reagieren und deren Abstand mit der Spannbackenverstellung veränderbar ist, dadurch gekennzeichnet, dass jedem Spannaggregat (1) mindestens ein spezifisches Teil (56–64) der Geber- und/oder der Sensoranordnung zum Festlegen der Endspannpositionen zugeordnet ist, welches mit dem Spannaggregat (1) automatisch in Funktion setzbar (Fig. 5, 10–12) ist.

11. Vorrichtung nach Anspruch 10 mit einer durch den Kraftantrieb verschiebbaren Trägerstange für ein Geberelement und zwei längs des Verschiebeweges des Geberelementes angeordneten Sensoren, dadurch gekennzeichnet, dass längs des Verschiebeweges weitere Sensoren (56–64) angeordnet sind, von denen jeweils zwei bestimmte für jedes eingewechselte Spannaggregat (1) automatisch auswählbar sind.

12. Vorrichtung nach Anspruch 11, dadurch gekennzeichnet, dass jedes Spannaggregat (1) mit einem Codegeber (66) versehen ist, dessen Code durch einen Codeleser (65) auslesbar ist, welcher einerseits eine Auswahlschaltung (156) für die Sensoren (56–64) steuert.

13. Vorrichtung nach Anspruch 11 oder 12, dadurch gekennzeichnet, dass die Sensoren (56–64) konzentrisch um die Trägerstange (4) angeordnet sind.

14. Vorrichtung nach Anspruch 13, dadurch gekennzeichnet, dass die Trägerstange (4) in einer zylindrischen Trommel (68) axial verschiebbar angeordnet ist, und dass auf der Trommel (68) Halter (67) für die Sensoren (56–64) befestigt sind.

15. Vorrichtung zur Einstellung von zwei einen Spannhub begrenzenden Endspannpositionen der durch einen Kraftantrieb (2, 3) verstellbaren Spannbacken eines auswechselbaren Werkstück-Spannaggregates (1) einer Werkzeugmaschine sowie zur Feststellung des Erreichens dieser Endspannpositionen, gekennzeichnet durch einen bei der Spannbackenverstellung mitverstellten Spannpositions-Istwertgeber (96, 97), durch einen Spannpositions-Sollwertgeber (90, 92) für die weiteste und die engste Spannposition, und durch einen mit dem Istwertgeber und dem Sollwertgeber verbundenen Komparator (93), der bei Feststellung einer Übereinstimmung von Soll- und Istwert ein Sperrsignal für die Werkzeugmaschine erzeugt (Fig. 13).

16. Vorrichtung nach Anspruch 15, dadurch gekennzeichnet, dass jedes Spannaggregat mit einem Codegeber (66) versehen ist, dessen Code durch einen Codeleser (65) auslesbar ist, dass von einer Programmsteuerung (90) für die Werkzeugmaschine ein Sollcode ausgegeben wird, und dass ein weiterer Komparator (91) vorgesehen ist, der den vom Codeleser ausgelesenen Code mit dem Sollcode vergleicht und bei Abweichung ein Sperrsignal für die Werkzeugmaschine erzeugt.

17. Vorrichtung nach Anspruch 15 oder 16, dadurch gekennzeichnet, dass der Spannpositions-Istwertgeber (96, 97) ein mit dem als Kolben-Zylinder-Anordnung (2, 3) gekoppeltes lineares Messglied ist, das als berührungslose Geber-Sensor-Anordnung arbeitet.

18. Vorrichtung nach einem der Ansprüche 15 bis 17, dadurch gekennzeichnet, dass der Spannpositions-Istwert als Prüfwerk für das Werkstück ausgewertet wird.

**Claims**

1. An arrangement for setting two clamping end positions, defining a clamping range, of the clamping jaws of an exchangeable workpiece-clamping unit (1) of a machine tool, which jaws are adjustable by a power-actuator (2, 3), and also for establishing that these end positions have been reached, each having an emitter element (5) arranged on a carrier rod (4) that is displaceable by the power-actuator, and having a sensor (6), arranged to be displaceable parallel to the carrier rod, which responds on proximity to or contact with the mitter, each clamping unit having associated with it at least one specific component for determining the clamping end positions which is exchangeable with the clamping unit, characterised in that a further sensor (7) displaceable parallel to the carrier rod is provided, in that with each clamping unit there are associated, as specific components, exchangeable limit elements (8, 9, 84, 85) for the displaceable sensors (6, 7), that make it possible to adjust the end positions independently of the adjustment of the clamping range by changing the effective spacing of the sensors, and thus to make a change relative to the basic spacing that determines the greatest permissible clamping range in the sense of decreasing the clamping range, in that the emitter element is longer than the spacing between the sensors, measured longitudinally of the carrier rod, when these are in the limiting positions, and in that the machine tool can only be put into operation when both sensors respond (Figs. 1, 5 to 7).

2. An arrangement according to claim 1, characterised in that each sensor (6, 7) is arranged on a guide (80–83) extending parallel to the carrier rod (4), and in that exchangeable limit elements (84, 85) are provided for each guide.

3. An arrangement according to claim 2, characterised in that, starting from the two limit elements (8, 9, 84, 85) of the two guides (80–83), adjustments to the associated sensors (6, 7) in opposite directions are possible.

4. An arrangement according to claim 3, characterised in that the guides (80–83) comprise guide rods and that the limit elements are formed by the shoulders of stepped sleeves (84, 85) slidable on the guide rods and on whose thinner section the sensors (6, 7) are displaceably arranged.

5. An arrangement according to claim 4, characterised in that the sleeves (84, 85) and/or guide rods (80–83) are provided with blocking means which prevent a sleeve (84, 85) being put on to a guide rod not associated therewith.

6. An arrangement for setting two clamping end positions, defining a clamping range, of the clamping jaws of an exchangeable workpiece-clamping unit (1) of a machine tool, which jaws are adjustable by a power-actuator (2, 3), and also for establishing that these end positions have been reached, having an emitter element (25, 25') arranged on a carrier rod (4) that is displaceable by the power actuator, and having a sensor (26) arranged along the displacement path of the emitter element that responds on proximity to or contact with the emitter element, the emitter element being exchangeable and each clamping unit having associated with it an emitter element having a basic length that determines the clamping end positions, characterised in that a further sensor (27) that responds to proximity to or contact with the emitter element is arranged along the displacement path of the emitter element, in that the emitter element is longer than the spacing between the sensors, measured longitudinally of the carrier rod, in that the emitter element makes it possible to adjust the clamping end positions independently of the adjustment of the clamping range by changing the effective length of the emitter element, and thus makes possible a change relative to the basic spacing that determines the greatest permissible clamping range in the sense of a reduction in the clamping range, and in that the machine tool can only be put into operation when both sensors (26, 27) respond. (Figs. 2, 8 to 9).

7. An arrangement according to claim 6, characterised in that the emitter elements consists of two telescopically engaging components (25a, 25b; 25a', 25b') arranged in succession in the longitudinal direction of the carrier rod (4) and which can be adjusted relative to one another from a limit position in order to shorten the emitter element (25, 25').

8. An arrangement for setting two clamping end positions, defining a clamping range, of the clamping jaws of an exchangeable workpiece-clamping unit (1) of a machine tool, which jaws are adjustable by a power-actuator (2, 3), and also for establishing that these end clamp positions have been reached, having an emitter element (35) arranged on a carrier rod (4) that is displaceable by the power actuator, and having a sensor (36) arranged along the displacement path of the emitter element, each clamping unit having associated with it at least one specific component for establishing the clamping end positions, which is exchangeable together with the clamping unit, characterised in that a further sensor (37) displaceable along the displacement path of the carrier rod is provided, in that with each clamping unit there is associated, as the specific component, an exchangeable sensor arrangement (36, 37) having a specific spacing between the sensors that makes it possible to adjust the end positions independently of the adjustment of the clamping range by changing the effective spacing between the sensors, and thus to make a change relative to the basic spacing that determines the greatest permissible clamping range in the sense of decreasing the clamping range, in that the emitter element is shorter than the spacing between the sensors, measured longitudinally of the carrier rod, and in that the machine tool can only be put into operation when neither of the two sensors responds (Fig. 3).

9. An arangement according to claim 8, characterised in that the sensors (36, 37) can be adjusted relative to one another from a limit position.

10. An arrangement for setting two clamping end positions, defining a clamping range, of the clamping jaws of an exchangeable workpiece-clamping unit (1) of a machine tool, which jaws are adjustable by a power-actuator (2, 3), and also for establishing that these end positions have been reached, consisting of an arrangement of emitters and sensors that respond on proximity of contact and the spacing between which varies with the adjustment of the clamping jaws, characterised in that with each clamping unit (1) there is associated at least one specific component (56–64) of the emitter and/or the sensor arrangement for establishing the clamping end positions which can be automatically set in operation with the clamping unit (1). (Figs. 5, 10–12).

11. An arrangement according to claim 10, having a carrier rod, displaceable by the power-actuator, for an emitter element, and two sensors arranged along the displacement path of the emitter element, characterised in that further sensors (56–64) are arranged along the displacement path, two of which can be selected automatically in each case specifically for each changed clamping unit (1).

12. An arrangement according to claim 11, characterised in that each clamping unit (1) is provided with a code emitter (66), whose code can be read by a code reader (65), which controls a selecting circuit (156) for the sensors (56—64).

13. An arrangement according to claim 11 or claim 12, cahracterised in that the sensors (56–64) are arranged concentrically about the carrier rod (4).

14. An arrangement according to claim 13, characterised in that the carrier rod (4) is arranged so as to be axially displaceable in a cylindrical drum (68), and in that holders (67) for the sensors (56–64) are fixed on the drum (68).

15. An arrangement for setting two clamping end positions, defining a clamping range, of the clamping jaws of an exchangeable workpiece-clamping unit (1) of a machine tool, which jaws are adjustable by a power-actuator (2, 3), and also for establishing that these end clamp positions have been reached, characterised by a clamp position-actual value emitter (96, 97) that is co-adjusted on adjustment of the clamping jaws, by a clamp position-desired value emitter (90, 92) for the widest and narrowest clamping positions, and by a comparator (93) connected to the actual value emitter and the desired value emitter, which produces a blocking signal for the machine tool when it establishes that the desired value and actual values agree (Fig. 13).

16. An arrangement according to claim 15, characterised in that each clamping unit is provided with a code emitter (66) whose code can be read by a code reader (65), in that a desired code is emitted by a program control (90) for the machine tool, and in that a further comparator (91) is provided which compares the code read by the code reader with the desired code and, if there is any deviation, produces a blocking signal for the machine tool.

17. An arrangement according to claim 15 or claim 16, characterised in that the clamp position-actual value emitter (96, 97) is a linear discriminating element coupled with the piston-cylinder arrangement (2, 3) and which operates as a contactless emitter-sensor arrangement.

18. An arrangement according to any one of claims 15 to 17, caracterised in that the clamp position-actual value is utilised as a test value for the workpiece.


**Revendications**

1. Dispositif de réglage de deux positions extrêmes, limitant une course de serrage, des mors, manœuvrable par un dispositif moteur (2, 3), d'un dispositif changeable de serrage de pièce (1) d'une machine-outil, et de détection de l'atteinte de ces positions extrêmes, comportant un élément-témoin (5) monté sur une tige support (4) mue par le dispositif moteur et un capteur (6) déplaçable parallèlement à cette tige support et réagissant à l'approche ou au contact de l'élément-témoin, à chaque dispositif de serrage étant associé au moins un élément particulier destiné à la fixation des positions extrêmes et pouvant être changé avec le dispositif de serrage, caractérisé en ce qu'il est prévu un autre capteur (7) déplaçable parallèlement à la tige support, en ce qu'à chaque dispositif de serrage sont associés comme éléments particuliers des éléments de butée changeables (8, 9, 84, 85) pour les capteurs déplaçables (6, 7) qui permettent un changement des positions extrêmes indépendant du changement de la course de serrage par modification de la longueur active de la distance des capteurs et ainsi une modification par rapport à la distance de base, déterminant la course maximale admissible de serrage, dans le sens d'une diminution de la course de serrage, en ce que la longueur de l'élément-témoin est supérieure à la distance des capteurs mesurée dans la direction longitudinale de la tige support lorsque les capteurs sont en position de butée, et en ce que la machine-outil ne peut être mise en marche qu'en cas d'actionnement des deux capteurs (Fig. 1 et 5 à 7).

2. Dispositif selon la revendication 1, caractérisé en ce que chaque capteur (6, 7) est monté sur un dispositif de guidage (80 à 83) s'étendant parallèlement à la tige support (4) et en se que pour chaque dispositif de guidage sont prévus des éléments de butée changeables (84, 85).

3. Dispositif selon la revendication 2, caractérisé en ce que des déplacements des capteurs (6, 7) en sens contraire à partir des deux éléments de butée (8, 9, 84, 85) des deux dispositifs de guidage (80 à 83) sont possibles.

4. Dispositif selon la revendication 3, caractérisé en ce que les dispositifs de guidage (80 à 83) sont formés de tiges et en ce que les éléments de butée sont formés par les épaulements de douilles étagées (84, 85) se glissant sur les tiges de guidage et sur la partie amincie desquelles les capteurs (6, 7) sont montés mobiles.

5. Dispositif selon la revendication 4, caractérisé en ce que les douilles (84, 85) et/ou les tiges de guidage (80 à 83) sont pourvues de moyens d'arrêt qui rendent impossible le montage d'une douille (84, 85) sur une tige de guidage qui ne lui correspond pas.

6. Dispositif de réglage de deux positions extrêmes, limitant une course de serrage, des mors, manœuvrables par un dispositif moteur (2, 3), d'un dispositif changeable de pièce (1) d'une machine-outil, et de détection de l'atteinte de ces positions etrêmes, comportant un élément-témoin (25, 25') monté sur une tige support (4) mue par le dispositif moteur et un capteur (26) placé le long de la trajectoire de cet élément-témoin et réagissant à l'approche ou au contact de celui-ci, l'élément-témoin pouvant être changé et à chaque dispositif de serrage étant associé un élément-témoin ayant une longueur de base déterminant les positions extrêmes, caractérisé en ce que le long de la trajectoire de l'élément-témoin est placé un autre capteur (27) réagissant à l'approche ou au contact de l'élément-témoin, en ce que la longueur de l'élément-témoin est supérieure à la distance des capteurs mesurée dans la direction longitudinale de la tige support, en ce que l'élément-témoin permet un changement des positions extrêmes indépendant du changement de la course de serrage par modification de la longueur active de l'élément-témoin et ainsi une modification par rapport à la distance de base, déterminant la course maximale admissible de serrage, dans le sens d'une diminution de la course de serrage, et en ce que la machine-outil ne peut être mise en marche qu'en cas d'actionnement des deux capteurs (26, 27) (fig. 2, 8 et 9).

7. Dispositif selon la revendication 6, caractérisé en ce que l'élément-témoin est constitué de deux parties (25a, 25b; 25a', 25b') placées l'une derrière l'autre dans la direction longitudinale de la tige support (4) et s'emboîtant qui peuvent, à partir d'une position de butée, être rapprochées dans le sens d'un raccourcissement de l'élément-témoin (25, 25').

8. Dispositif de réglage de deux positions extrêmes, limitant une course de serrage, des mors, manœuvrables par un dispositif moteur (2, 3), d'un dispositif changeable de serrage de pièce (1) d'une machine-outil, et de détection de l'atteinte de ces positions extrêmes, comportant un élément-témoin (35) monté sur une tige support (4) mue par le dispositif moteur et un capteur (36) placé le long de la trajectoire de cet élément-témoin, à chaque dispositif de serrage étant associé au moins un élément particulier destiné à la fixation des positions extrêmes et pouvant être changé avec le dispositif de serrage, caractérisé en ce qu'il est prévu un autre capteur (37) placé le long de la trajectoire de l'élément-témoin, en ce qu'à chaque dispositif de serrage est associé comme élément particulier un système de capteurs changeable (36, 37) avec écartement déterminé des capteurs qui permet un changement des positions extrêmes indépendant du changement de la course de serrage par modification de la longueur active de la distance des capteurs et ainsi und modification par rapport à la distance de base, déterminant la course maximale admissible de serrage, dans le sens d'une diminution de la course de serrage, en ce que la longueur de l'élément-témoin est inférieure à la distance des capteurs mesurée dans la direction longitudinale de la tige support, et en ce que le dispositif moteur ne peut être mis en marche que lorsqu'aucun des deux capteurs n'est actionné (fig. 3).

9. Dispositif selon la revendication 8, caractérisé en ce que les capteurs (36, 37) peuvent être rapprochés à partir d'une position de butée.

10. Dispositif de réglage de deux positions extrêmes, limitant une course de serrage, des mors, manœuvrables par un dispositif moteur (2, 3), d'un dispositif changeable de serrage de pièce (1) d'une machine-outil, et de détection de l'atteinte de ces positions extrêmes, constitué d'un dispositif témoin et d'un système de capteurs qui réagissent à l'approche ou au contact et dont la distance peut varier avec le déplacement des mors, caractérisé en ce qu'à chaque dispositif de serrage (1) est associée au moins une partie particulière (56 à 64) du dispositif témoin et/ou du système de capteur destinée à la fixation des positions extrêmes et pouvant être mise en fonction automatiquement avec le dispositif de serrage (1) (fig. 5 et 10 à 12).

11. Dispositif selon la revendication 10, comportant une tige de support d'un élément-témoin mue par le dispositif moteur et deux capteurs placés le long de la trajectoire de cet élément-témoin, caractérisé en ce que le long de cette trajectoire sont placés d'autres capteurs (56 à 64) dont deux déterminés peuvent être sélectionnés automatiquement pour chaque dispositif de serrage (1) monté.

12. Dispositif selon la revendication 11, caractérisé en ce que chaque dispositif de serrage (1) est pourvu d'un émetteur de message codé (66) dont le message codé peut être lu par un lecteur (65) qui commande un dispositif (156) de sélection des capteurs (56 à 64).

13. Dispositif selon l'une des revendications 11 et 12, caractérisé en ce que les capteurs (56 à 64) sont placés concentriquement autour de la tige support (4).

14. Dispositif selon la des revendication 13, caractérisé en ce que la tige support (4) est montée mobile axialement dans un tambour cylindrique (68) et en ce que sur ce tambour (68) sont fixées des montures (67) pour les capteurs (56 à 64).

15. Dispositif de réglage de deux positions extrêmes, limitant une course de serrage, des mors, manœuvrables par un dispositif moteur (2, 3), d'un dispositif changeable de serrage de pièce (1) d'une machine-outil, et de détection de l'atteinte de ces positions extrêmes, caractérisé par un émetteur de valeur instantanée de position de serrage (96, 97) qui accompagne les mors dans leur déplacement, un émetteur de valeurs prescrites de positions de serrage (90, 92) pour la position de serrage correspondant à l'état le plus large et la position de serrage correspondant à l'état le plus étroit, et un comparateur (93) relié à ces deux émetteurs et produisant un signal de blocage de la machine-outil en cas de constatation de concordance entre valeur prescrite et valeur instantanée (fig. 13).

16. Dispositif selon la revendication 15, caractérisé en ce que chaque dispositif de serrage est pourvu d'un émetteur de message codé (66) dont le message codé peut être lu par un lecteur (65), en ce qu'une commande à programme (90) de la machine-outil émet un message codé de consigne, et en ce qu'il est prévu un autre comparateur (91) qui compare le message codé lu par le lecteur au message codé de consigne et, en cas de discordance, produit un signal de blocage de la machine-outil.

17. Dispositif selon l'une des revendications 15 et 16, caractérisé en ce que l'émetteur de valeur instantanée de position de serrage (96, 97) est un organe linéaire de mesure qui est accouplé au dispositif moteur, constitué d'un vérin (2, 3), et fonctionne comme dispositif témoin-capteur sans contact.

18. Dispositif selon l'une des revendications 15 à 17, caractérisé en ce que la valeur instantanée de la position de serrage est utilisée comme valeur de contrôle de la pièce.

Spannfutter
auf    zu

Steuerung
für
Spannfutter
Kraftantrieb

16

14

15

13

⎍ Anlaufimpuls

12

Rückmeldung Hubbegrenzung

5

4

1

6      7

3

10

8   9

2

AND    11

17

Spindelantrieb
ein

AND → zum Spindelantrieb

# FIG. 1

FIG. 2

FIG. 3

0 033 886

FIG. 4

Spindelantrieb
ein

AND 17

zum
Spindelantrieb

Rückmeldung Hubbegrenzung

Steuerung
für
Spannfutter-
Kraftantrieb 16

zu
Spannfutter

auf
Spannfutter

Anlaufimpuls

65
66

1

3

2

15

12

13

14

31 NOR

56

Auswahl
Schaltung

60

59

58

57

56

64

63

62

61

55

4

17

FIG. 5

0 033 886

FIG. 6

FIG. 7

FIG.8

FIG. 9

FIG.12

FIG. 10

FIG. 11

FIG. 13